(19) Europäisches Patentamt / European Patent Office / Office européen des brevets

(11) **EP 2 890 034 B1**

(12) **EUROPEAN PATENT SPECIFICATION**

(45) Date of publication and mention
of the grant of the patent:
**25.10.2017 Bulletin 2017/43**

(51) Int Cl.:
**H04L 1/06** (2006.01)     **H04L 5/00** (2006.01)

(21) Application number: **13842765.3**

(22) Date of filing: **11.09.2013**

(86) International application number:
**PCT/CN2013/083287**

(87) International publication number:
**WO 2014/048249 (03.04.2014 Gazette 2014/14)**

(54) **DEVICE AND METHOD FOR PROCESSING DOWNLINK CONTROL INFORMATION**

VORRICHTUNG UND VERFAHREN ZUR VERARBEITUNG VON
DOWNLINK-STEUERINFORMATIONEN

DISPOSITIF ET PROCÉDÉ DE TRAITEMENT D'INFORMATIONS DE COMMANDE DE LIAISON
DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 CN 201210370527**

(43) Date of publication of application:
**01.07.2015 Bulletin 2015/27**

(73) Proprietor: **ZTE Corporation
Guangdong Province 518057 (CN)**

(72) Inventors:
• **LI, Yong**
  **Shenzhen**
  **Guangdong 518057 (CN)**
• **CHEN, Yijian**
  **Shenzhen**
  **Guangdong 518057 (CN)**
• **XU, Jun**
  **Shenzhen**
  **Guangdong 518057 (CN)**
• **LI, Yu Ngok**
  **Shenzhen**
  **Guangdong 518057 (CN)**

(74) Representative: **Murgitroyd & Company
165-169 Scotland Street
Glasgow G5 8PL (GB)**

(56) References cited:
**WO-A2-2008/041110     CN-A- 101 834 629
CN-A- 102 781 098     US-A1- 2011 237 283**
**US-A1- 2012 176 884**

• CMCC: "DMRS indication in DL enhanced multiple antenna transmission", 3GPP DRAFT; R1-105273_DMRS_INDICATION_IN_DL_ENHANCED_M ULTIPLE_ANTENNA_TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 14 October 2010 (2010-10-14), XP050462809, [retrieved on 2010-10-14]
• ZTE: "Considerations on Downlink Control Signalling for LTE-A DL-MIMO", 3GPP DRAFT; R1-104961_DL_CONTROL_SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 27 August 2010 (2010-08-27), XP050450245, [retrieved on 2010-08-27]
• ZTE: "Consideration on Downlink Signalling for DMRS port indication with different MU dimensions", 3GPP DRAFT; R1-101834_MU_DL_SIGNALLING_DMRSPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 7 April 2010 (2010-04-07), XP050419664, [retrieved on 2010-04-07]

**Description**

Technical Field

The present invention relates to the field of wireless communications, and in particular, to an apparatus and method for processing downlink control information.

Background of the Related Art

In the wireless communication technology, when a base station side (for example, an evolved node B, i.e., eNB, or eNodeB) transmits data using multiple antennas, a manner of spatial multiplexing may be used to improve the data transmission rate. That is, when the transmitting terminal transmits different data at different antennas using the same time frequency resources, the receiving terminal (for example, a User Equipment (UE)) also receives data using multiple antennas. In a case of a single user, all antenna resources are allocated to the same user, and the user exclusively occupies physical resources allocated by the base station side in one transmission interval. This transmission mode is referred to as Single User Multiple-Input Multiple-Out-put (SU-MIMO for short). In a case of multiple users, spatial resources of different antennas are allocated to different users. A user and at least another user share the physical resources allocated by the base station side in one transmission interval, and the sharing mode may be a spatial division multi-access mode or a spatial division multiplexing mode. This transmission mode is referred to as Multiple User Multiple-Input Multiple-Out-put (MU-MIMO for short). Wherein, the physical resources allocated by the base station side refer to time frequency resources. If a transmission system supports SU-MIMO and MU-MIMO at the same time, the eNB needs to provide data under the two modes to the UE. When the UE is in the SU-MIMO mode or MU-MIMO mode, it needs to know a rank used by the eNB for transmitting the MIMO data to the UE. In the SU-MIMO mode, all antenna resources are allocated to the same user, and the number of layers used for transmitting the MIMO data is equal to a rank used by the eNB for transmitting the MIMO data. In the MU-MIMO mode, the number of layers corresponding to transmission by a user is less than the total number of layers used by the eNB for transmitting MIMO data. If the switching is to be performed between the SU-MIMO mode and the MU-MIMO mode, the eNB needs to notify the UE of different control data in different transmission modes.

In the standard of Long-Term Evolution (LTE for short) Release 8, the following three downlink physical control channels are defined: a Physical Control Format Indicator Channel (PCFICH for short), a Physical Hybrid Automatic Retransmission Request Indicator Channel (PHICH for short) and a Physical Downlink Control Channel (PDCCH for short). Wherein, the PDCCH is used for carrying Downlink Control Information (DCI for short), comprising uplink and downlink scheduling information and uplink power control information. The DCI formats are divided as follows: DCI format 0, DCI format 1, DCI format 1A, DCI format 1B, DCI format 1C, DCI format 1D, DCI format 2, DCI format 2A, DCI format 3 and DCI format 3A etc. Wherein, the transmission mode 5 which supports MU-MIMO uses downlink control information in a DCI format 1D, while the downlink power field (i.e., downlink power offset field) $\delta_{\text{power-offset}}$ in the DCI format 1D is used to indicate information that in the MU-MIMO mode, power of a user is reduced by a half (i.e., -10log10 (2)). As the MU-MIMO transmission mode 5 only supports MU-MIMO transmission of two users, the MU-MIMO transmission mode 5 may support dynamic switching between the SU-MIMO mode and the MU-MIMO mode through the downlink power field. However, no matter whether in the SU-MIMO mode or in the MU-MIMO mode, the DCI format only supports transmission of one stream for one UE. Although the LTE Release 8 supports single-user transmission of at most two streams in the transmission mode 4, as the switching between the transmission modes is semi-static, in the LTE Release 8, dynamic switching between the single-user multi-stream transmission and multi-user transmission cannot be achieved.

In the LTE Release 9, in order to enhance the downlink multi-antenna transmission, a transmission mode of dual-stream beamforming is introduced, while DCI format 2B is added in the downlink control information to support this transmission mode. There is an identification bit of a scrambling identity (SCID) in the DCI format 2B, to support two different scrambling sequences. The eNB can allocate the two scrambling sequences to different users, and multiple users are in multiplexing on the same resource. In addition, when only one transmission block is enabled, a New Data Indication (NDI) bit corresponding to a disabled transmission block is also used to indicate an antenna port during single-layer transmission.

In addition, in the LTE Release 10, the MIMO transmission mode is to use a Demodulation Reference Signal (DMRS for short) as a pilot used for demodulation. The UE can perform channel estimation and interference estimation on a pilot only after acquiring a position of the pilot and a scrambling sequence. For a pilot on each port number, a pilot pattern is defined in the protocol, and if the UE knows a port number used for the pilot, the UE knows the pilot pattern. The base station notifies in the control signaling the number of layers used for transmitting data, i.e., the number of ports used for the pilot. According to the protocol, the UE knows consecutive port numbers of the notified number starting from the port number 7. Thus, the DMRS is always used starting from the port number 7, and cannot be used starting from the port number 9 or 11 or 13. In R10, in the ports 9-14, the pilot uses a fixed scrambling sequence, which needs not to be indicated in the signaling. For the ports 7 and 8, there may be two sequences for selection, which may be indicated in the signaling.

The selection of the scrambling sequence of the DMRS sequence is embodied in the definition of the initialization parameter $c_{\text{init}}$ of the pilot sequence. In R10, the definition is $c_{\text{init}} = \left( \lfloor n_{\text{s}} / 2 \rfloor + 1 \right) \cdot \left( 2 N_{\text{ID}}^{\text{cell}} + 1 \right) \cdot 2^{16} + n_{\text{SCID}}$, wherein, $n_{\text{s}}$ represents a slot number in a radio frame, $N_{\text{ID}}^{\text{cell}}$ represents a cell number and $n_{\text{SCID}}$ represents a scrambling sequence identity number a value of which is 0 or 1.

For less than 8 antennas and/or more than 8 antennas, in order to further develop a gain of multi-user multiplexing, it needs to support more users in multiplexing, or more number of layers may be achieved for each user in multiplexing. For example, 8 users are in multiplexing, and each user uses one layer; or 2 users are in multiplexing, and each user uses four layers for transmission etc. Then, in this scenario, pilots of various users are intensively put on port 7 or 8 for transmission, and may result in significant interference to each other. At the same time, there are very few scrambling sequences for use, it results in multiple users using the same scrambling code, thereby causing significant interference between users using the same scrambling code. Therefore, there is a need to solve the problem of interference between pilots during multi-user multiplexing.

The terminal users not only are distributed in the plane, for example, they are in different distances from the base station in the horizontal plane, but also are distributed in the space. For example, the terminal users are at different heights in the space, and these features result in the angles of view of the line between the base station and the terminals being different in the vertical direction. If the base station transmits to the terminal in the vertical direction by means of beamforming, a gain of beamforming can be obtained for the transmission in the vertical direction. At the same time, because beamforming transmission mode is used in the vertical direction, discrimination of the transmission in the vertical direction is increased. This provides a basis for more users in multiplexing for transmission, and therefore more users are in multiplexing to increase the multi-user gain, which is the 3D MIMO technology. With the increase in the number of antennas, the beam generated by beamforming will narrow, and the gain of beamforming will increase. At the same time, the discrimination of the transmission in the space will increase, and more users may be in multiplexing. In a sense of the existing antenna technology, more than 8 antennas may be used for transmission, for example, 16, 32, 64, 128, or 256 antennas may be used for transmission. Transmission using more than 8 antennas is a Massive MIMO technology. If multiple antennas are placed in a vertical plane to form an area array for transmission, a space for the antennas of the base station may be effectively used to place multiple antennas in a small space, thereby not only obtaining the gain of Massive MIMO, but also obtaining the gain of 3D MIMO, which is a 3D Massive MIMO technology. In a virtual MIMO technology, a case that a large number of users are in multiplexing is also an important application case thereof for obtaining a gain.

By developing and using the 3D MIMO, Massive MIMO, 3D Massive MIMO technologies and the virtual MIMO technology, a resulting gain is obtained, wherein an important content is that a number of users are in multiplexing for transmission. Demodulation of the transmission data depends on the data DMRS accompanying with the transmission, channel coefficients on the corresponding transmission data layer are estimated through the data DMRS, and then the data is demodulated by using the estimated channel coefficients. When a large number of users are in multiplexing for transmission, the interference between the data DMRSs thereof will accumulatively increase with the increase in the number of users and the number of layers, which influences the estimation accuracy of the channel coefficients, thereby influencing the performance of demodulating the received data.

Therefore, in a case that more users are in multiplexing using less than 8 antennas, and in a case that multi-user multiplexing is performed for transmission in 3D MIMO, Massive MIMO and 3D Massive MIMO scenarios, the problem of interference of data DMRSs between users is a problem needed to be solved at present.

Relevant technologies are also known from US 2012/176884 A1 (ZHANG GUODONG [US] ET AL) 12 July 2012; US 2011/237283 A1 (SHAN CHENG [KR] ET AL) 29 September 2011; CMCC: "DMRS indication in DL enhanced multiple antenna transmission", 3GPP DRAFT; R1-105273 DMRS INDICATION IN DL ENHANCED MULTIPLE ANTENNA TRANSMISSION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Xi'an; 20101011, 14 October 2010, XP050462809; ZTE: "Considerations on Downlink Control Signalling for LTE-A DL-MIMO", 3GPP DRAFT; R1-104961 DL CONTROL SIGNALLING, 3RD GENERATION PARTNERSHIP PROJECT (3GPP), MOBILE COMPETENCE CENTRE;650, ROUTE DES LUCIOLES;F-06921 SOPHIA-ANTIPOLIS CEDEX;FRANCE, vol. RAN WG1, no. Madrid, Spain; 20100823, 27 August, XP050450245; and ZTE: "Consideration on Downlink Signalling for DMRS port indication with different MU dimensions", 3GPP DRAFT; R1-101834 MU_DL SIGNALLING_DMRSPORT, 3RD GENERATION PARTNERSHIP PROJECT (3GPP), MOBILE COMPETENCE CENTRE;650 ROUTE DES LUCIOLES;F-06921 SOPHIA-ANTIPOLIS CEDEX;FRANCE, vol. RAN WG1, no. Beijing, china; 20100412, 7 April 2010, XP050419664.

Summary of the Invention

The technical problem to be solved by the embodiments of the present invention is to provide an apparatus and method for processing downlink control information as defined in the attached independent claims, which solves the problem of interference between data Demodulation Reference Signals (DMRSs) when a large number of users are in multiplexing for transmission.

Also provided is an apparatus for processing downlink control information, applicable to a base station and comprising a downlink control information generation module and a downlink control information transmission module, wherein,

the downlink control information generation module is configured to generate a downlink control information format when data transmission is performed, wherein a field of the downlink control information format carries indication information for indicating to a terminal a port used for transmitting a data DMRS and a scrambling identity number corresponding to a pilot generation sequence; and

the downlink control information transmission module is configured to transmit the downlink control information format to the terminal.

Alternatively, the port used for transmitting a data DMRS comprises 4 or 8 ports corresponding to two scrambling identity numbers, and the indication information indicates to the terminal one of the two scrambling identity numbers corresponding to the ports used for transmitting a data DMRS.

Alternatively, the indication information indicates to the terminal that the scrambling identity numbers corresponding to the pilot generation sequence are function values of a terminal identification number.

Alternatively, the scrambling identity numbers corresponding to the pilot generation sequence correspond to N sets of selectable values; and

the downlink control information generation module is further configured to configure one set of selectable values in the N sets of selectable values for the terminal, and notify the terminal of the configuration, wherein the indication information indicates that one value of the configured set of selectable values is selected as the scrambling identity number corresponding to the pilot generation sequence.

Alternatively, the indication information indicates to the terminal a state corresponding to a set of ports used for transmitting a data DMRS, wherein, the set corresponding to each state comprises a minimum port number, and a set of minimum port numbers of all states is a set of all ports used for transmitting a data DMRS.

Alternatively, port numbers of ports in the set corresponding to each state are consecutive.

Alternatively, the indication information indicates to the terminal a state corresponding to a set of ports used for transmitting a data DMRS, wherein, the set corresponding to each state comprises a minimum port number, and a set constituted by minimum port numbers of all states is [7,8,9,10].

Alternatively, the indication information indicates that, a port 7 is used and a value of a scrambling identity number is 0; or a port 7 is used and a value of a scrambling identity number is 1; or a port 7 is used and a value of a scrambling identity number is 2; or a port 7 is used and a value of a scrambling identity number is 3; or a port 8 is used and a value of a scrambling identity number is 0; or a port 8 is used and a value of a scrambling identity number is 1; or a port 8 is used and a value of a scrambling identity number is 2; or a port 8 is used and a value of a scrambling identity number is 3; or ports 7 and 8 are used and a value of a scrambling identity number is 0; or ports 7 and 8 are used and a value of a scrambling identity number is 1; or ports 7 and 8 are used and a value of a scrambling identity number is 2; or ports 7 and 8 are used and a value of a scrambling identity number is 3.

Alternatively, the indication information indicates that, a port 7 is used and a value of a scrambling identity number is 0; or a port 7 is used and a value of a scrambling identity number is 1; or a port 8 is used and a value of a scrambling identity number is 0; or a port 8 is used and a value of a scrambling identity number is 1; or a port 9 is used and a value of a scrambling identity number is 0; or a port 9 is used and a value of a scrambling identity number is 1; or a port 10 is used and a value of a scrambling identity number is 0; or a port 10 is used and a value of a scrambling identity number is 1; or ports 7 and 8 are used and a value of a scrambling identity number is 0; or ports 7 and 8 are used and a value of a scrambling identity number is 1; or ports 9 and 10 are used and a value of a scrambling identity number is 0; or ports 9 and 10 are used and a value of a scrambling identity number is 1.

Alternatively, the indication information indicates that, a port 7 is used, and a value of a scrambling identity number is a predefined value; or a port 7 is used, and a value of a scrambling identity number is a terminal identification number; or a port 8 is used, and a value of a scrambling identity number is a predefined value; or a port 8 is used, and a value of a scrambling identity number is a terminal identification number; or ports 7 and 8 are used, and a value of a scrambling identity number is a predefined value; or ports 7 and 8 are used, and a value of a scrambling identity number is a terminal identification number.

Alternatively, the indication information indicates that, a port 7 is used; or a port 8 is used; or a port 9 is used; or a port 10 is used; or a port 11 is used; or a port 12 is used; or a port 13 is used; or a port 14 is used.

Alternatively, the indication information indicates that, ports 7 and 8 are used; or ports 9 and 10 are used; or ports 11 and 12 are used; or ports 13 and 14 are used.

Also provided is a method for processing downlink control information comprises:

a base station generating a downlink control information format when data transmission is performed, wherein a field of the downlink control information format carries indication information for indicating to a terminal a port used for transmitting a data DMRS and a scrambling identity number corresponding to a pilot generation sequence; and

the base station transmitting the downlink control information format to the terminal.

Alternatively, the port used for transmitting a data DMRS comprises 4 or 8 ports corresponding to two scrambling identity numbers, and the indication information indicates to the terminal one of the two scrambling identity numbers corresponding to the ports used for transmitting a data DMRS.

Alternatively, the indication information indicates to the terminal that the scrambling identity numbers corresponding to the pilot generation sequence are function values of a terminal identification number.

Alternatively, the scrambling identity numbers corresponding to the pilot generation sequence correspond to N sets of selectable values; and

the base station configures one set of selectable values in the N sets of selectable values for the terminal, and notify the terminal of the configuration, wherein the indication information indicates that one value of the configured set of selectable values is selected as the scrambling identity number corresponding to the pilot generation sequence.

Alternatively, the indication information indicates to the terminal a state corresponding to a set of ports used for transmitting a data DMRS, wherein, the set corresponding to each state comprises a minimum port number, and a set of minimum port numbers of all states is a set of all ports used for transmitting a data DMRS.

Alternatively, port numbers of ports in the set corresponding to each state are consecutive.

Alternatively, the indication information indicates to the terminal a state corresponding to a set of ports used for transmitting a data DMRS, wherein, the set corresponding to each state comprises a minimum port number, and a set constituted by minimum port numbers of all states is [7,8,9,10].

In conclusion, by indicating to a terminal a port used for transmitting a data DMRS and a scrambling identity number corresponding to a pilot generation sequence, the embodiments of the present invention solve the problem of interference between DMRSs used during multi-user data transmission.

Brief Description of Drawings

Fig. 1 is an architectural diagram of an apparatus for processing downlink control information according to an embodiment of the present invention; and
Fig. 2 is a flowchart of a method for processing downlink control information according to an embodiment of the present invention.

Preferred Embodiments of the Invention

The invention relates to Embodiment five. All other references to embodiments are to be understood as examples useful for understanding the invention.

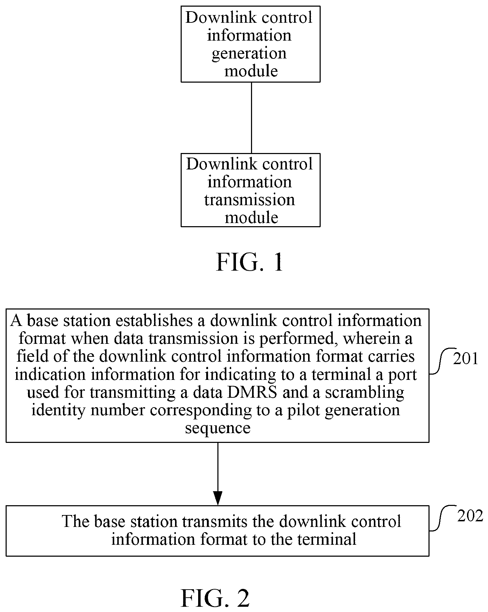

As shown in Fig. 1, the embodiments provide an apparatus for processing downlink control information, applicable to a base station (eNodeB), and comprising:

a downlink control information generation module, configured to generate a downlink control information format when data transmission is performed, wherein a field of the downlink control information format carries indication information for indicating to a terminal a port used for transmitting a data DMRS and a scrambling identity number corresponding to a pilot generation sequence; and
a downlink control information transmission module, configured to transmit the downlink control information format to the terminal.

The control signaling in the LTE R10 Release cannot solve the problem of interference of DMRSs between different users in a scenario that more than 2 users are in multiplexing or there are more than 2 layers for each user, and it is not applicable to a case that more users are in multiplexing using less than 8 antennas, and is not suitable for a case that multiple users are in multiplexing for transmission in a scenario of 3D MIMO, Massive MIMO, 3D Massive MIMO, or virtual MIMO etc.

The present embodiment can solve the problem of interference of data DMRSs used during multi-user data transmission in a scenario that more than 2 users are in multiplexing or there are more than 2 layers for each user, and it is not only applicable to a case that a large number of users are in multiplexing using less than 8 antennas, but also is suitable for a case that multiple users are in multiplexing for transmission in a scenario of 3D MIMO, Massive MIMO, 3D Massive MIMO, or virtual MIMO etc.

Due to different target scenarios of the application, the number of DMRS ports which can be supported at most in the control signaling may also be different. A different number of these DMRS ports belong to the scope of the present invention.

The number of ports of DMRS, the number of the layers for data transmission, and the rank of the data transmission are equivalent.

The indication information indicates to a terminal a port used for transmitting a data DMRS and a scrambling identity number $n_{SCID}$ corresponding to a pilot generation sequence. The scrambling identity number may be indicated by the scrambling identity SCID. There is a corresponding relationship between the scrambling identity and the scrambling identity number. When the indication information indicates the scrambling identity, it is equivalent to indicating the scrambling identity number.

Some concepts herein will be described below.

In general, the protocol will identify a port where a data DMRS is located using a port number, and define a corresponding data DMRS under the corresponding port number. The port where the data DMRS is located is also referred to as a DMRS port, or a demodulation port. If the demodulation of data depends on the data DMRS on a port, it is considered that the data is transmitted on the corresponding port. The definition of the DMRS port is based on the definition of the DMRS. Sometimes, in order to coordinate the utilization efficiency of the resources used for the data DMRSs on these ports, a part of predefined ports are configured to be in an available state or an unavailable state. The ports which can be used refer to demodulation ports which can be used, and refer to demodulation ports which are predefined in the protocol. When the upper layer has a function of configuring the demodulation ports to be in an available state or an unavailable state, the ports which can be used refer to demodulation ports which are configured to be in an available state.

"a port used for a DMRS", "a port where a DMRS is located", and "a port of a DMRSs" have the same meaning, and are equivalent.

"Indicating a ports used for transmitting a data DMRS", "indicating a port numbers of a ports used for transmitting a data DMRS", and "indicating a port number used for transmitting a data DMRS" are equivalent.

"Port numbers are consecutive" refers to that the ports are arranged in an order of the port numbers, and the positions of the used ports are adjacent in the arrangement and there is no interval therebetween. For example, the ports used for transmitting the data DMRS are [7,8,9,10,11,12,13,14], wherein, the used ports are [9,10,11,12], and the positions of the used ports are adjacent in the arrangement of the ports used for transmitting the data DMRS, that is, the used ports are consecutive in the ports used for transmitting the data DMRS. If the used ports are [9,10,12,13], the positions of the used ports are not adjacent in the arrangement of the ports used for transmitting the data DMRS, because they skip the port 11.

Embodiment one:

In the embodiment one, indication information in a field of the downlink control information format is used to indicate a port which is specifically used for transmitting the data DMRS, and indicate the used scrambling identity or scrambling identity number. According to a number of the supported port numbers, the number of bits used for the field varies. The following table represents a case that states of combination of 6 bits are used to support 8 port numbers. Wherein, digits 0-63 are used to represent 64 states of the bit combination, and there is no difference in sequencing in the corresponding relationship between various states and the indication information, as long as they correspond one by one.

In a case that 8 demodulation port numbers may be used for pilots, the port numbers which are specifically used for transmitting the data DMRS and the used scrambling identity are indicated as shown in table one.

Table one

| 1 codeword: codeword 0 enabled, codeword 1 disabled | | 2 codewords: codeword 0 enabled, codeword 1 enabled | |
|---|---|---|---|
| signaling bits 1-6 | signaling | signaling bits 1-6 | signaling |
| 0 | 1 layer, antenna port 7 | 0 | two layers, antenna ports 7 to 8 |

(continued)

| 1 codeword: codeword 0 enabled, codeword 1 disabled | | 2 codewords: codeword 0 enabled, codeword 1 enabled | |
|---|---|---|---|
| signaling bits 1-6 | signaling | signaling bits 1-6 | signaling |
|  | SCID =0 |  | SCID =0 |
| 1 | 1 layer, antenna port 8 SCID =0 | 1 | two layers, antenna ports 8 to 9 SCID =0 |
| 2 | 1 layer, antenna port 9 SCID =0 | 2 | two layers, antenna ports 9 to 10 SCID =0 |
| 3 | 1 layer, antenna port 10 SCID =0 | 3 | two layers, antenna ports 10 to 11 SCID =0 |
| 4 | 1 layer, antenna port 11 SCID =0 | 4 | two layers, antenna ports 11 to 12 SCID =0 |
| 5 | 1 layer, antenna port 12 SCID =0 | 5 | two layers, antenna ports 12 to 13 SCID =0 |
| 6 | 1 layer, antenna port 13 SCID =0 | 6 | two layers, antenna ports 13 to 14 SCID =0 |
| 7 | 1 layer, antenna port 14 SCID =0 | 7 | two layers, antenna ports 7 to 8 SCID =1 |
| 8 | 1 layer, antenna port 7 SCID =1 | 8 | two layers, antenna ports 8 to 9 SCID =1 |
| 9 | 1 layer, antenna port 8 SCID =1 | 9 | two layers, antenna ports 9 to 10 SCID =1 |
| 10 | 1 layer, antenna port 9 SCID =1 | 10 | 2 layers, antenna ports 10 to 11 SCID =1 |
| 11 | 1 layer, antenna port 10 SCID =1 | 11 | 2 layers, antenna ports 11 to 12 SCID =1 |
| 12 | 1 layer, antenna port 11 SCID =1 | 12 | 2 layers, antenna ports 12 to 13 SCID =1 |
| 13 | 1 layer, antenna port 12 SCID =1 | 13 | 2 layers, antenna ports 13 to 14 SCID =1 |
| 14 | 1 layer, antenna port 13 SCID =1 | 14 | 3 layers, antenna ports 7 to 9 SCID =0 |
| 15 | 1 layer, antenna port 14 SCID =1 | 15 | 3 layers, antenna ports 8 to 10 SCID =0 |
| 16 | 2 layers, antenna ports 7 to 8 SCID =0 | 16 | 3 layers, antenna ports 9 to 11 SCID =0 |
| 17 | 2 layers, antenna ports 8 to 9 SCID =0 | 17 | 3 layers, antenna ports 10 to 12 SCID =0 |
| 18 | 2 layers, antenna ports 9 to 10 SCID =0 | 18 | 3 layers, antenna ports 11 to 13 SCID =0 |
| 19 | 2 layers, antenna ports 10 to 11 SCID =0 | 19 | 3 layers, antenna ports 12 to 14 SCID =0 |
| 20 | 2 layers, antenna ports 11 to 12 | 20 | 3 layers, antenna ports 7 to 9 |

(continued)

| 1 codeword: codeword 0 enabled, codeword 1 disabled | | 2 codewords: codeword 0 enabled, codeword 1 enabled | |
|---|---|---|---|
| signaling bits 1-6 | signaling | signaling bits 1-6 | signaling |
| | SCID =0 | | SCID =1 |
| 21 | 2 layers, antenna ports 12 to 13 SCID =0 | 21 | 3 layers, antenna ports 8 to 10 SCID =1 |
| 22 | 2 layers, antenna ports 13 to 14 SCID =0 | 22 | 3 layers, antenna ports 9 to 11 SCID =1 |
| 23 | 2 layers, antenna ports 7 to 8 SCID =1 | 23 | 3 layers, antenna ports 10 to 12 SCID =1 |
| 24 | 2 layers, antenna ports 8 to 9 SCID =1 | 24 | 3 layers, antenna ports 11 to 13 SCID =1 |
| 25 | 2 layers, antenna ports 9 to 10 SCID =2 | 25 | 3 layers, antenna ports 12 to 14 SCID =1 |
| 26 | 2 layers, antenna ports 10 to 11 SCID =1 | 26 | 4 layers, antenna ports 7 to 10 SCID =0 |
| 27 | 2 layers, antenna ports 11 to 12 SCID =1 | 27 | 4 layers, antenna ports 8 to 11 SCID =0 |
| 28 | 2 layers, antenna ports 12 to 13 SCID =1 | 28 | 4 layers, antenna ports 9 to 12 SCID =0 |
| 29 | 2 layers, antenna ports 13 to 14 SCID =1 | 29 | 4 layers, antenna ports 10 to 13 SCID =0 |
| 30 | 3 layers, antenna ports 7 to 9 SCID =0 | 30 | 4 layers, antenna ports 11 to 14 SCID =0 |
| 31 | 3 layers, antenna ports 8 to 10 SCID =0 | 31 | 4 layers, antenna ports 7 to 10 SCID =1 |
| 32 | 3 layers, antenna ports 9 to 11 SCID =0 | 32 | 4 layers, antenna ports 8 to 11 SCID =1 |
| 33 | 3 layers, antenna ports 10 to 12 SCID =0 | 33 | 4 layers, antenna ports 9 to 12 SCID =1 |
| 34 | 3 layers, antenna ports 11 to 13 SCID =0 | 34 | 4 layers, antenna ports 10 to 13 SCID =1 |
| 35 | 3 layers, antenna ports 12 to 14 SCID =0 | 35 | 4 layers, antenna ports 11 to 14 SCID =1 |
| 36 | 3 layers, antenna ports 7 to 9 SCID =1 | 36 | 5 layers, antenna ports 7 to 11 SCID =0 |
| 37 | 3 layers, antenna ports 8 to 10 SCID =1 | 37 | 5 layers, antenna ports 8 to 12 SCID =0 |
| 38 | 3 layers, antenna ports 9 to 11 SCID =1 | 38 | 5 layers, antenna ports 9 to 13 SCID =0 |
| 39 | 3 layers, antenna ports 10 to 12 SCID =1 | 39 | 5 layers, antenna ports 10 to 14 SCID =0 |

(continued)

| 1 codeword: codeword 0 enabled, codeword 1 disabled | | 2 codewords: codeword 0 enabled, codeword 1 enabled | |
|---|---|---|---|
| signaling bits 1-6 | signaling | signaling bits 1-6 | signaling |
| 40 | 3 layers, antenna ports 11 to 13 SCID =1 | 40 | 5 layers, antenna ports 7 to 11 SCID =1 |
| 41 | 3 layers, antenna ports 12 to 14 SCID =1 | 41 | 5 layers, antenna ports 8 to 12 SCID =1 |
| 42 | 4 layers, antenna ports 7 to 10 SCID =0 | 42 | 5 layers, antenna ports 9 to 13 SCID =1 |
| 43 | 4 layers, antenna ports 8 to 11 SCID =0 | 43 | 5 layers, antenna ports 10 to 14 SCID =1 |
| 44 | 4 layers, antenna ports 9 to 12 SCID =0 | 44 | 6 layers, antenna ports 7 to 12 SCID =0 |
| 45 | 4 layers, antenna ports 10 to 13 SCID =0 | 45 | 6 layers, antenna ports 8 to 13 SCID =0 |
| 46 | 4 layers, antenna ports 11 to 14 SCID =0 | 46 | 6 layers, antenna ports 9 to 14 SCID =0 |
| 47 | 4 layers, antenna ports 7 to 10 SCID =1 | 47 | 6 layers, antenna ports 7 to 12 SCID =1 |
| 48 | 4 layers, antenna ports 8 to 11 SCID =1 | 48 | 6 layers, antenna ports 8 to 13 SCID =1 |
| 49 | 4 layers, antenna ports 9 to 12 SCID =1 | 49 | 6 layers, antenna ports 9 to 14 SCID =1 |
| 50 | 4 layers, antenna ports 10 to 13 SCID =1 | 50 | 7 layers, antenna ports 7 to 13 SCID =0 |
| 51 | 4 layers, antenna ports 11 to 14 SCID =1 | 51 | 7 layers, antenna ports 8 to 14 SCID =0 |
| 52 | reserved | 52 | 7 layers, antenna ports 7 to 13 SCID =1 |
| 53 | reserved | 53 | 7 layers, antenna ports 8 to 14 SCID =1 |
| 54 | reserved | 54 | 8 layers, antenna ports 7 to 14 SCID =0 |
| 55 | reserved | 55 | 8 layers, antenna ports 7 to 14 SCID =1 |
| 56 | reserved | 56 | reserved |
| 57 | reserved | 57 | reserved |
| 58 | reserved | 58 | reserved |
| 59 | reserved | 59 | reserved |
| 60 | reserved | 60 | reserved |
| 61 | reserved | 61 | reserved |

(continued)

| 1 codeword:<br>codeword 0 enabled,<br>codeword 1 disabled | | 2 codewords:<br>codeword 0 enabled,<br>codeword 1 enabled | |
|---|---|---|---|
| signaling bits 1-6 | signaling | signaling bits 1-6 | signaling |
| 62 | reserved | 62 | reserved |
| 63 | reserved | 63 | reserved |

The above table gives values of the scrambling identity SCID, and the values of the scrambling identity number $n_{SCID}$ are obtained by the one-to-one mapping relationship between the values of the scrambling identity SCID and the values of the scrambling identity number $n_{SCID}$. For example, when SCID=0, $n_{NSCID}$=0; and when SCID=1, $n_{SCID}$=0.

Alternatively, the above table may also directly give the values of the scrambling identity number $n_{SCID}$. For example, in the above table, SCID is substituted with $n_{SCID}$, or let $n_{SCID}$ =SCID.

Embodiment two:

4 or 8 ports in the ports used for transmitting the data DMRS correspond to two scrambling identity numbers, and the indication information indicates one of the two scrambling identity numbers corresponding to the ports used for transmitting the data DMRS. The embodiment will be described by taking 8 ports as an example, as shown in the above table one.

The beneficial effects are that multiple users transmit on the same port, and the more the number of users and the number of transmission layers are, the larger the interference of pilots between different users is. The users may be dispersed on different ports for transmission, to reduce the interference. At the same time, different scrambling identity numbers are used for multiple users transmitting on the same port, to further reduce the interference of DMRSs between users. If there is only one scrambling identity number for part of ports, when multiple users transmit on the part of ports, the interference between different users cannot be further reduced.

Embodiment three :

The indication information indicates to the terminal that the scrambling identity numbers corresponding to the pilot generation sequence are function values of a terminal identification number.

For example, in the LTE R10 Release, the scrambling of the data DMRSs is achieved by using different pilot generation sequences. Generation of different data DMRSs is achieved by using different values defined for the initialization parameter $c_{init}$ In R10, $c_{init}$ is defined as follows:

$$c_{init} = \left( \lfloor n_s / 2 \rfloor + 1 \right) \cdot \left( 2 N_{ID}^{cell} + 1 \right) \cdot 2^{16} + n_{SCID}$$

wherein, $n_s$ represents a slot number in a radio frame, $N_{ID}^{cell}$ represents a cell number, and $n_{SCID}$ represents a scrambling identity number, a value of which is 0 or 1.

In the present embodiment, a value of $n_{SCID}$ is as follows:

when SCID=0, $n_{SCID}$=a predefined value; and when SCID =1, $n_{SCID}$=$f$ (a terminal identification number). alternatively,
when SCID=0, $n_{SCID}$=$f$(a terminal identification number); and when SCID=1, $n_{SCID}$=a predefined value.

The predefined value is 0 or 1; $f(\ )$ represents a function, for example, it may be that $f$(a terminal identification number)=a terminal identification number.

In the present embodiment, the scrambling identity SCID is indicated dynamically by the indication information, and the values of the scrambling identity number $n_{SCID}$ are selected according to the values of the scrambling identity SCID, thereby controlling the pilot generation sequence. When multiple users are in multiplexing, if $n_{SCID}$=a terminal identification number is used, different scrambling codes may be used for different users, thereby achieving the purpose of reducing the interference between multiple users.

Beneficial effects: common groups of time-frequency resources are used for data DMRSs of multiple ports by means of code division. When multi-user transmission is performed on these resources, if the data DMRSs of users on these ports use the same scrambling identity number, pilots of users on different ports are orthogonal and there is no interference between pilots of users on different ports. When there are more users needed to be in multiplexing, multiple users need to transmit on the same port, and then if users on the same port use the same scrambling identity number, it will result in interference of pilots between different users on the port. If different scrambling identity numbers are used for users on the same port, it may reduce the interference between them, and when there are more users on the same port, it needs to configure multiple different scrambling identity numbers for them. If control signaling is used to indicate the scrambling identity numbers of them one by one, it needs to increase the overhead of the bits in the signaling. If the control signaling only needs to indicate that the terminal identification numbers or the function values of the terminal identification numbers are used as the scrambling identity numbers, multiple users on the same port can use different scrambling identity numbers, and the overhead of bits of the signaling is saved. That is, when there is only one user on the same port, users on different ports on the same group of resources can use the same scrambling identity number, i.e., a predefined value, thereby enabling the pilots of users on different ports to be orthogonal; and when there are multiple users on the same port, the multiple users on the same port may select function values of the terminal identification numbers thereof as the scrambling identity numbers, which may reduce the interference between pilots of different users on the same port.

Embodiment four:

The protocol predefines N sets of selectable values of scrambling identity numbers, and the downlink control information generation module configures a set of selectable values $n_{SCID}$ in N sets of selectable values, and the configuration is notified to the terminal through the RRC signaling. The indication information may indicate that the scrambling identity number corresponding to the data DMRS is selected from the set of selectable values configured by the RRC signaling.

For example, the protocol pre-configures three sets of selectable values of scrambling identity numbers, such as [0, 1], [0, f(a terminal identification number)], and [1, f (a terminal identification number)]. Of course, there may be less than or more than 3 sets of selectable values, which may be determined according to the expected function of the protocol. A set of values is selected from various predefined sets of values as a transmission configuration by the RRC signaling, and the indication information in the downlink control information format is used to notify the value of the scrambling identity, and the selection in the configuration is determined according to the value of the scrambling identity.

For example, when SCID=0, $n_{SCID}$=a first element, and when SCID=1, $n_{SCID}$= a second element.

Beneficial effects: N sets of selectable values are defined, and various sets of values are suitable for being applied to different scenarios. For example, 2 sets of values are defined, one is [a first predefined value, a second predefined value], and the other is [a first predefined value, a terminal identification number]. When no more than 2 users are in multiplexing on the same port during multi-user transmission, there will be no interference of pilots between users on different ports of the same predefined value, and therefore, there will be less interference between pilots of multiple users resulting from using the first set of values than using the second set of values; and when there are more users in multiplexing on the same port, there will be more interference between the pilots of users on the same port resulting from using the first set of values, and therefore, the use of the second set of values is better.

Embodiment five:

The indication information indicates to the terminal a state corresponding to a set of ports used for transmitting a data DMRS, wherein, the set corresponding to each state comprises a minimum port number, and a set of minimum port numbers of all states is a set of all available ports, for example, {7,8,9,10,11,12,13,14}, as shown in the above table one. Wherein, the reserved states are exceptions.

Beneficial effects: the users may be scheduled to any available port, thereby avoiding too many users being in multiplexing on the same port, which results in the accumulative interference of pilots between users being too large.

Embodiment six:

Port numbers of ports in the set corresponding to each above state are consecutive, as shown in the above table one. Wherein, the reserved states are exceptions.

Beneficial effects: the characteristics that the ports used for transmitting the data DMRS are consecutive in the ports used for transmitting the data DMRS can reduce the number of the used port combinations, thereby reducing the overhead of the number of bits in the signaling.

Embodiment seven:

The indication information may indicate that, a port 7 is used and a value of a scrambling identity number is 0; or a port 7 is used and a value of a scrambling identity number is 1; or a port 7 is used and a value of a scrambling identity number is 2; or a port 7 is used and a value of a scrambling identity number is 3; or a port 8 is used and a value of a scrambling identity number is 0; or a port 8 is used and a value of a scrambling identity number is 1; or a port 8 is used and a value of a scrambling identity number is 2; or a port 8 is used and a value of a scrambling identity number is 3; or ports 7 and 8 are used and a value of a scrambling identity number is 0; or ports 7 and 8 are used and a value of a scrambling identity number is 1; or ports 7 and 8 are used and a value of a scrambling identity number is 2; or ports 7 and 8 are used and a value of a scrambling identity number is 3, as shown in the following table two.

Table two

| 1 codeword: codeword 0 enabled, codeword 1 disabled | | 2 codewords: codeword 0 enabled, codeword 1 disabled | |
|---|---|---|---|
| signaling bits 1-4 | signaling | signaling bits 1-4 | signaling |
| 0 | 1 layer, antenna port 7 $n_{SCID} = 0$ | 0 | 2 layers, antenna ports 7 to 8 $n_{SCID} = 0$ |
| 1 | 1 layer, antenna port 7 $n_{SCID} = 1$ | 1 | 2 layers, antenna ports 7 to 8 |
| | | | $n_{SCID} = 1$ |
| 2 | 1 layer, antenna port 7 $n_{SCID} = 2$ | 2 | 2 layers, antenna ports 7 to 8 $n_{SCID} = 2$ |
| 3 | 1 layer, antenna port 7 $n_{SCID} = 3$ | 3 | 2 layers, antenna ports 7 to 8 $n_{SCID} = 3$ |
| 4 | 1 layer, antenna port 8 $n_{SCID} = 0$ | 4 | 3 layers, antenna ports 7 to 9 |
| 5 | 1 layer, antenna port 8 $n_{SCID} = 1$ | 5 | 4 layers, antenna ports 7 to 10 |
| 6 | 1 layer, antenna port 8 $n_{SCID} = 2$ | 6 | 5 layers, antenna ports 7 to 11 |
| 7 | 1 layer, antenna port 8 $n_{SCID} = 3$ | 7 | 6 layers, antenna ports 7 to 12 |
| 8 | 2 layers, antenna ports 7 to 8 | 8 | 7 layers, antenna ports 7 to 13 |
| 9 | 3 layers, antenna ports 7 to 9 | 9 | 8 layers, antenna ports7 to 14 |
| 10 | 4 layers, antenna ports 7 to 10 | 10 | reserved |
| 11 | reserved | 11 | reserved |
| 12 | reserved | 12 | reserved |
| 13 | reserved | 13 | reserved |
| 14 | reserved | 14 | reserved |
| 15 | reserved | 15 | reserved |

There is no difference in sequencing in the corresponding relationship between various states of bit combinations and the indication information in the above table, as long as they correspond one by one.

Beneficial effects: the scrambling identity numbers which may be used on ports 7 and 8 are added, thereby increasing the number of users in multiplexing on ports 7 and 8 during multi-user transmission, or when multiple users are in multiplexing on ports 7 and 8 during multi-user transmission, different scrambling identity numbers are used for different users, which may reduce the interference between pilots of different users.

Embodiment eight:

The indication information indicates that, a port 7 is used and a value of a scrambling identity number is 0; or a port 7 is used and a value of a scrambling identity number is 1; or a port 8 is used and a value of a scrambling identity number is 0; or a port 8 is used and a value of a scrambling identity number is 1; or a port 9 is used and a value of a scrambling identity number is 0; or a port 9 is used and a value of a scrambling identity number is 1; or a port 10 is used and a value of a scrambling identity number is 0; or a port 10 is used and a value of a scrambling identity number is 1; or ports 7 and 8 are used and a value of a scrambling identity number is 0; or ports 7 and 8 are used and a value of a scrambling identity number is 1; or ports 9 and 10 are used and a value of a scrambling identity number is 0; or ports 9 and 10 are used and a value of a scrambling identity number is 1, as shown in the following table three.

Table three

| 1 codeword: codeword 0 enabled, codeword 1 disabled | | 2 codewords: codeword 0 enabled, codeword 1 enabled | |
|---|---|---|---|
| signaling bits 1-4 | signaling | signaling bits 1-4 | signaling |
| 0 | 1 layer, antenna port 7 $n_{SCID} = 0$ | 0 | 2 layers, antenna ports 7 to 8 $n_{SCID} = 0$ |
| 1 | 1 layer, antenna port 7 $n_{SCID} = 1$ | 1 | 2 layers, antenna ports 7 to 8 $n_{SCID} = 1$ |
| 2 | 1 layer, antenna port 8 $n_{SCID} = 0$ | 2 | 2 layers, antenna ports 9 to 10 $n_{SCID} = 0$ |
| 3 | 1 layer, antenna port 8 $n_{SCID} = 1$ | 3 | 2 layers, antenna ports 9 to 10 $n_{SCID} = 1$ |
| 4 | 1 layer, antenna port 9 $n_{SCID} = 0$ | 4 | 3 layers, antenna ports 7 to 9 |
| 5 | 1 layer, antenna port 9 $n_{SCID} = 1$ | 5 | 4 layers, antenna ports 7 to 10 |
| 6 | 1 layer, antenna port 10 $n_{SCID} = 0$ | 6 | 5 layers, antenna ports 7 to 11 |
| 7 | 1 layer, antenna port 10 $n_{SCID} = 1$ | 7 | 6 layers, antenna ports 7 to 12 |
| 8 | 2 layers, antenna ports 7 to 8 | 8 | 7 layers, antenna ports 7 to 13 |
| 9 | 2 layers, antenna ports 9 to 10 | | 8 layers ,antenna ports 7 to 14 |
| 10 | 3 layers, antenna ports 7 to 9 | 9 | reserved |
| 11 | 4 layers, antenna ports 7 to 10 | 10 | reserved |
| 12 | reserved | 11 | reserved |
| 13 | reserved | 12 | reserved |
| 14 | reserved | 13 | reserved |
| 15 | reserved | 14 | reserved |

There is no difference in sequencing in the corresponding relationship between various states of bit combinations and the indication signaling in the above table, as long as they correspond one by one.

Beneficial effects: the time frequency resources used for ports 9 and 10 are different from those used for ports 7 and 8. The scrambling identity numbers on ports 9 and 10 are added for selection, so that when more users are in multiplexing, data of part of users are transmitted on ports 9 and 10, thereby reducing interference of pilots between users on ports 7 and 8, and because on ports 9 and 10, there may be different scrambling identity numbers for selection for different users on the same port, this will reduce the interference between pilots of users on ports 9 and 10.

Embodiment nine:

The indication information indicates that, a port 7 is used, and a value of a scrambling identity number is a predefined value; or a port 7 is used, and a value of a scrambling identity number is a terminal identification number; or a port 8 is used, and a value of a scrambling identity number is a predefined value; or a port 8 is used, and a value of a scrambling identity number is a terminal identification number; or ports 7 and 8 are used, and a value of a scrambling identity number is a predefined value; or ports 7 and 8 are used, and a value of a scrambling identity number is a terminal identification number, as shown in the following table four.

Table four

| 1 codeword: codeword 0 enabled, codeword 1 disabled | | 2 codewords: codeword 0 enabled, codeword 1 enabled | |
|---|---|---|---|
| signaling bits 1-3 | signaling | signaling bits 1-3 | signaling |
| 0 | 1 layer, antenna port 7 $n_{SCID} = 0$ | 0 | 2 layers, antenna ports 7 to 8 $n_{SCID} = 0$ |
| 1 | 1 layer, antenna port 7 $n_{SCID}$= a terminal identification number | 1 | 2 layers, antenna ports 7 to 8 $n_{SCID}$= a terminal identification number |
| 2 | 1 layer, antenna port 8 $n_{SCID} = 0$ | 2 | 3 layers, antenna ports 7 to 9 |
| 3 | 1 layer, antenna port 8 $n_{SCID}$= a terminal identification number | 3 | 4 layers, antenna ports 7 to 10 |
| 4 | 2 layers, antenna ports 7 to 8 | 4 | 5 layers, antenna ports 7 to 11 |
| 5 | 3 layers, antenna ports 7 to 9 | 5 | 6 layers, antenna ports 7 to 12 |
| 6 | 4 layers, antenna ports 7 to 10 | 6 | 7 layers, antenna ports 7 to 13 |
| 7 | reserved | 7 | 8 layers, antenna ports 7 to 14 |

There is no difference in sequencing in the corresponding relationship between various states of bit combinations and the indication signaling in the above table, as long as they correspond one by one. The predefined value is 0 in the above table.

Beneficial effects: data of a user are transmitted on port 7, and data of another user are transmitted on port 8. If the values of the scrambling identity numbers are predefined values, the two users may use the same scrambling identity number, and thereby the pilots of the two users are orthogonal to each other. If data of more users are to be transmitted on the same port, various users select respective terminal identification numbers as scrambling identity numbers, thereby reducing interference between different users under the same port. In this way, multi-user data transmission can be performed by only using ports 7 and 8, and the overhead of the signaling indication is saved.

Embodiment ten:

The indication information indicates to the terminal a state corresponding to a set of ports used for transmitting a data DMRS, wherein, the set corresponding to each state comprises a minimum port number, and a set of minimum port numbers of all states is [7,8,9,10], as shown in the above table three.

Beneficial effects: positions of ports used for users are added, and at the same time, the overhead of the number of bits in the signaling is reduced.

Embodiment eleven:

The indication information indicates that a port 7 is used; or a port 8 is used; or a port 9 is used; or a port 10 is used; or a port 11 is used; or a port 12 is used; or a port 13 is used; or a port 14 is used, for example, a case that one codeword is enabled as shown in the following table 5 and a case that one codeword is enabled as shown in table 6.

There is no difference in sequencing in the corresponding relationship between various states of bit combinations and the indication information in the tables five and six, as long as they correspond one by one.

Beneficial effects: 8 users are in multiplexing on different ports, each user uses 1 layer and uses the same scrambling identity number, and the pilots thereof are orthogonal.

Table five

| 1 codeword: codeword 0 enabled, codeword 1 disabled | | 2 codewords: codeword 0 enabled, codeword 1 enabled | |
|---|---|---|---|
| an encoding state of signaling bits | signaling | an encoding state of signaling bits | signaling |
| 0 | 1 layer, antenna port 7 $n_{SCID} = 0$ | 0 | |
| 1 | 1 layer, antenna port 8 $n_{SCID} = 0$ | 1 | |
| 2 | 1 layer, antenna port 9 $n_{SCID} = 0$ | 2 | |
| 3 | 1 layer, antenna port 10 $n_{SCID} = 0$ | 3 | |
| 4 | 1 layer, antenna port 11 $n_{SCID} = 0$ | 4 | |
| 5 | 1 layer, antenna port 12 $n_{SCID} = 0$ | 5 | |
| 6 | 1 layer, antenna port 13 $n_{SCID} = 0$ | 6 | |
| 7 | 1 layer, antenna port 14 $n_{SCID} = 0$ | 7 | |
| 8 | 1 layer, antenna port 7 $n_{SCID} = 1$ | | |
| 9 | 1 layer, antenna port 8 $n_{SCID} = 1$ | | |
| 10 | 1 layer, antenna port 9 $n_{SCID} = 1$ | | |
| 11 | 1 layer, antenna port 10 $n_{SCID} = 1$ | | |
| 12 | 1 layer, antenna port 11 $n_{SCID} = 1$ | | |
| 13 | 1 layer, antenna port 12 $n_{SCID} = 1$ | | |
| 14 | 1 layer, antenna port 13 $n_{SCID} = 1$ | | |
| 15 | 1 layer, antenna port 14 $n_{SCID} = 1$ | | |

Table six

| 1 codeword: codeword 0 enabled, codeword 1 disabled | | 2 codewords: codeword 0enabled, codeword 1 enabled | |
|---|---|---|---|
| an encoding state of signaling bits | signaling | an encoding state of signaling bits | signaling |
| 0 | 1 layer, antenna port7 $n_{SCID} = 0$ | 0 | |
| 1 | 1 layer, antenna port8 $n_{SCID} = 0$ | 1 | |
| 2 | 1 layer, antenna port7 $n_{SCID} = 1$ | 2 | |
| 3 | 1 layer, antenna port8 $n_{SCID} = 1$ | 3 | |
| 4 | 1 layer, antenna port9 | 4 | |
| 5 | 1 layer, antenna port10 | 5 | |
| 6 | 1 layer, antenna port11 | 6 | |
| 7 | 1 layer, antenna port12 | 7 | |
| 8 | 1 layer, antenna port13 | 8 | |
| 9 | 1 layer, antenna port14 | 9 | |

Embodiment twelve:

The indication information indicates that ports 7 and 8 are used; or ports 9 and 10 are used; or ports 11 and 12 are used; or ports 13 and 14 are used, as shown in the following tables 7 and 8.

There is no difference in sequencing in the corresponding relationship between various states of bit combinations and the indication signaling in the tables seven and eight, as long as they correspond one by one.

Beneficial effects: 4 users are in multiplexing on different ports, each user uses 2 layers and uses the same scrambling identity number, and the pilots thereof are orthogonal.

Table seven

| 1 codeword: codeword 0 enabled, codeword 1 disabled | | 2 codewords: codeword 0 enabled, codeword 1 enabled | |
|---|---|---|---|
| an encoding state of signaling bits | signaling | an encoding state of signaling bits | signaling |
| 0 | 2 layers, antenna ports 7 to 8 $n_{SCID} = 0$ | 0 | 2 layers, antenna ports 7 to 8 $n_{SCID} = 0$ |
| 1 | 2 layers, antenna ports 9 to 10 $n_{SCID} = 0$ | 1 | 2 layers, antenna ports 9 to 10 $n_{SCID} = 0$ |
| 2 | 2 layers, antenna ports 11 to 12 $n_{SCID} = 0$ | 2 | 2 layers, antenna ports 11 to 12 $n_{SCID} = 0$ |
| 3 | 2 layers, antenna ports 13 to 14 $n_{SCID} = 0$ | 3 | 2 layers, antenna ports 13 to 14 $n_{SCID} = 0$ |

(continued)

| 1 codeword:<br>codeword 0 enabled,<br>codeword 1 disabled | | 2 codewords:<br>codeword 0 enabled,<br>codeword 1 enabled | |
|---|---|---|---|
| an encoding state of signaling bits | signaling | an encoding state of signaling bits | signaling |
| 4 | 2 layers, antenna ports 7 to 8<br>$n_{SCID} = 1$ | 4 | 2 layers, antenna ports 7 to 8<br>$n_{SCID} = 1$ |
| 5 | 2 layers, antenna ports 9 to 10<br>$n_{SCID} = 1$ | 5 | 2 layers, antenna ports 9 to 10<br>$n_{SCID} = 1$ |
| 6 | 2 layers, antenna ports 11 to 12<br>$n_{SCID} = 1$ | 6 | 2 layers, antenna ports 11 to 12<br>$n_{SCID} = 1$ |
| 7 | 2 layers, antenna ports 13 to 14<br>$n_{SCID} = 1$ | 7 | 2 layers, antenna ports 13 to 14<br>$n_{SCID} = 1$ |

Table eight

| 1 codeword:<br>codeword 0 enabled,<br>codeword 1 disabled | | 2 codewords:<br>codeword 0enabled,<br>codeword 1 enabled | |
|---|---|---|---|
| an encoding state of signaling bits | signaling | an encoding state of signaling bits | signaling |
| 0 | 2 layers, antenna ports 7 to 8<br>$n_{SCID} = 0$ | 0 | 2 layers, antenna ports 7 to 8<br>$n_{SCID} = 0$ |
| 1 | 2 layers, antenna ports 9 to 10<br>$n_{SCID} = 0$ | 1 | 2 layers, antenna ports 9 to 10<br>$n_{SCID} = 0$ |
| 2 | 2 layers, antenna ports 11 to 12 | 2 | 2 layers, antenna ports 11 to 12 |
| 3 | 2 layers, antenna ports 13 to 14 | 3 | 2 layers, antenna ports 13 to 14 |
| 4 | 2 layers, antenna ports 7 to 8<br>$n_{SCID} = 1$ | 4 | 2 layers, antenna ports 7 to 8<br>$n_{SCID} = 1$ |
| 5 | 2 layers, antenna ports 9 to 10<br>$n_{SCID} = 1$ | 5 | 2 layers, antenna ports 9 to 10<br>$n_{SCID} = 1$ |
| 6 | 2 layers, antenna ports 11 to 12 | 6 | 2 layers, antenna ports 11 to 12 |
| 7 | 2 layers, antenna ports 13 to 14 | 7 | 2 layers, antenna ports 13 to 14 |

As shown in Fig. 2, a method for processing downlink control information according to the present embodiment comprises the following steps.

In step 201, a base station generates a downlink control information format when data transmission is performed, wherein a field of the downlink control information format carries indication information for indicating to a terminal a port used for transmitting a data DMRS and a scrambling identity number corresponding to a pilot generation sequence; and in step 202, the base station transmits the downlink control information format to the terminal.

The port used for transmitting a data DMRS comprises 4 or 8 ports corresponding to two scrambling identity numbers, and the indication information indicates to the terminal one of the two scrambling identity numbers corresponding to the ports used for transmitting a data DMRS.

The indication information indicates to the terminal that the scrambling identity numbers corresponding to the pilot generation sequence are function values of a terminal identification number.

The scrambling identity numbers corresponding to the pilot generation sequence correspond to N sets of selectable values; and

the base station configures one set of selectable values in the N sets of selectable values for the terminal, and notify the terminal of the configuration, wherein the indication information indicates that one of the configured set of selectable values is selected as the scrambling identity number corresponding to the pilot generation sequence.

The indication information indicates to the terminal a state corresponding to a set of ports used for transmitting a data DMRS, wherein, the set corresponding to each state comprises a minimum port number, and a set of minimum port numbers of all states is a set of all ports used for transmitting a data DMRS.

Port numbers of ports in the set corresponding to each state are consecutive.

The indication information indicates to the terminal a state corresponding to a set of ports used for transmitting a data DMRS, wherein, the set corresponding to each state comprises a minimum port number, and a set constituted by minimum port numbers of all states is [7,8,9,10].

The indication information indicates that a port 7 is used and a value of a scrambling identity number is 0; or a port 7 is used and a value of a scrambling identity number is 1; or a port 7 is used and a value of a scrambling identity number is 2; or a port 7 is used and a value of a scrambling identity number is 3; or a port 8 is used and a value of a scrambling identity number is 0; or a port 8 is used and a value of a scrambling identity number is 1; or a port 8 is used and a value of a scrambling identity number is 2; or a port 8 is used and a value of a scrambling identity number is 3; or ports 7 and 8 are used and a value of a scrambling identity number is 0; or ports 7 and 8 are used and a value of a scrambling identity number is 1; or ports 7 and 8 are used and a value of a scrambling identity number is 2; or ports 7 and 8 are used and a value of a scrambling identity number is 3.

The indication information indicates that a port 7 is used and a value of a scrambling identity number is 0; or a port 7 is used and a value of a scrambling identity number is 1; or a port 8 is used and a value of a scrambling identity number is 0; or a port 8 is used and a value of a scrambling identity number is 1; or a port 9 is used and a value of a scrambling identity number is 0; or a port 9 is used and a value of a scrambling identity number is 1; or a port 10 is used and a value of a scrambling identity number is 0; or a port 10 is used and a value of a scrambling identity number is 1; or ports 7 and 8 are used and a value of a scrambling identity number is 0; or ports 7 and 8 are used and a value of a scrambling identity number is 1; or ports 9 and 10 are used and a value of a scrambling identity number is 0; or ports 9 and 10 are used and a value of a scrambling identity number is 1.

The indication information indicates that a port 7 is used, and a value of a scrambling identity number is a predefined value; or a port 7 is used, and a value of a scrambling identity number is a terminal identification number; or a port 8 is used, and a value of a scrambling identity number is a predefined value; or a port 8 is used, and a value of a scrambling identity number is a terminal identification number; or ports 7 and 8 are used, and a value of a scrambling identity number is a predefined value; or ports 7 and 8 are used, and a value of a scrambling identity number is a terminal identification number.

The indication information indicates that a port 7 is used; or a port 8 is used; or a port 9 is used; or a port 10 is used; or a port 11 is used; or a port 12 is used; or a port 13 is used; or a port 14 is used.

The indication information indicates that ports 7 and 8 are used; or ports 9 and 10 are used; or ports 11 and 12 are used; or ports 13 and 14 are used.

Through the embodiments of the present invention, it can be seen that the present invention effectively solves the problem of interference of DMRSs in a case that a large number of users are in multiplexing, comprising a case of multi-user multiplexing transmission in a scenario of 3D MIMO, Massive MIMO, 3D Massive MIMO, or virtual MIMO.

Obviously, those skilled in the art should understand that each module or each step of the aforementioned embodiments of the present invention can be implemented with general computing devices, and can be integrated in a single computing device, or distributed onto a network consisting of a plurality of computing devices; alternatively, they can be implemented with program codes executable by the computing devices, which can be stored in storage devices to be executed by the computing devices; alternatively, they are respectively made into a plurality of integrated circuit modules; alternatively, it is implemented with making several modules or steps of them into a single integrated circuit module. Thus, the embodiments of the present invention are not limited to any specific combinations of hardware and software.

The above description is only the preferred embodiment of the present invention and is not intended to limit the embodiments of the present invention.

Industrial Applicability

By indicating to a terminal a port used for transmitting a data DMRS and a scrambling identity number corresponding to a pilot generation sequence, the embodiments of the present invention solve the problem of interference between DMRSs used during multi-user data transmission.

**Claims**

1. An apparatus for processing downlink control information, applicable to a base station and comprising a downlink control information generation module and a downlink control information transmission module, wherein the downlink control information generation module is configured to generate a downlink control information format when data transmission is performed, wherein a field of the downlink control information format carries indication information for indicating to a terminal a port used for transmitting a data Demodulation Reference Signal, DMRS, and a scrambling identity number corresponding to a pilot generation sequence; and
the downlink control information transmission module is configured to transmit the downlink control information format to the terminal;
wherein scrambling of data Demodulation Reference Signals, DMRSs, is achieved by using different pilot generation sequences, wherein, the indication information indicates to the terminal a state corresponding to a set of ports used for transmitting a data DMRS, wherein, the set corresponding to each state comprises a minimum port number,
**characterised in that** a set of minimum port numbers of all states is a set of all available ports, so that when transmitting the data DMRS, the terminal can be scheduled to any port of all available ports, wherein, all available ports include ports 7, 8, 9, 10, 11, 12, 13 and 14, so that a set constituted by minimum port numbers of all states is [7,8,9,10,11,12,13,14].

2. A method for processing downlink control information, comprising:

generating (201) by a base station a downlink control information format when data transmission is performed, wherein a field of the downlink control information format carries indication information for indicating to a terminal a port used for transmitting a data Demodulation Reference Signal, DMRS, and a scrambling identity number corresponding to a pilot generation sequence; and transmitting (202) by the base station the downlink control information format to the terminal; wherein scrambling of data Demodulation Reference Signals, DMRSs, is achieved by using different pilot generation sequences, wherein, the indication information indicates to the terminal a state corresponding to a set of ports used for transmitting a data DMRS, wherein, the set corresponding to each state comprises a minimum port number,
**characterised in that** a set of minimum port numbers of all states is a set of all available ports, so that when transmitting the data DMRS, the terminal can be scheduled to any port of all available ports, wherein, all available ports include ports 7, 8, 9, 10, 11, 12, 13 and 14, so that a set constituted by minimum port numbers of all states is [7,8,9,10,11,12,13,14].

**Patentansprüche**

1. Eine Vorrichtung zum Verarbeiten von Abwärtsstrecken-Steuerungsinformation, anwendbar auf eine Basisstation und beinhaltend ein Abwärtsstrecken-Steuerungsinformations-Erzeugungsmodul und ein Abwärtsstrecken-Steuerungsinformations-Übertragungsmodul,
wobei
das Abwärtsstrecken-Steuerungsinformation-Erzeugungsmodul konfiguriert ist, um ein Abwärtsstrecken-Steuerungsinformationsformat zu erzeugen, wenn eine Datenübertragung durchgeführt wird, wobei ein Feld des Abwärtsstrecken-Steuerungsinformationsformats Angabeinformation trägt, um einem Endgerät einen Port anzugeben, der zum Übertragen eines Daten-Demodulationsreferenzsignals, DMRS, und einer einer Piloterzeugungszeichenfolge entsprechenden Verwürfelungsidentitätsnummer verwendet wird; und
das Abwärtsstrecken-Steuerungsinformations-Übertragungsmodul konfiguriert ist, um
das Abwärtsstrecken-Steuerungsinformationsformat an das Endgerät zu übertragen;

wobei eine Verwürfelung von Daten-Demodulationsreferenzsignalen, DMRS, durch die Verwendung von verschiedenen Piloterzeugungszeichenfolgen erreicht wird,

wobei die Angabeinformation dem Endgerät einen Zustand angibt, der einem Satz von Ports entspricht, die zum Übertragen eines Daten-DMRS verwendet werden, wobei der einem jeweiligen Zustand entsprechende Satz eine Mindestportnummer beinhaltet, **dadurch gekennzeichnet, dass** ein Satz von Mindestportnummern aller Zustände ein Satz von allen verfügbaren Ports ist, so dass, wenn das Daten-DMRS übertragen wird,

das Endgerät auf irgendeinen Port von allen verfügbaren Ports festgelegt werden kann, wobei alle verfügbaren Ports die Ports 7, 8, 9, 10, 11, 12, 13 und 14 umfassen, so dass ein Satz, der aus Mindestportnummern aller Zustände gebildet ist, [7,8,9,10,11,12,13,14] ist.

2.  Ein Verfahren zum Verarbeiten von Abwärtsstrecken-Steuerungsinformation, beinhaltend:

Erzeugen (201), durch eine Basisstation, eines Abwärtsstrecken-Steuerungsinformationsformats, wenn eine Datenübertragung durchgeführt wird, wobei ein Feld des Abwärtsstrecken-Steuerungsinformationsformats Angabeinformation trägt, um einem Endgerät einen Port anzugeben, der zum Übertragen eines Daten-Demodulationsreferenzsignals, DMRS, und einer einer Piloterzeugungszeichenfolge entsprechenden Verwürfelungsidentitätsnummer verwendet wird; und

Übertragen (202), durch die Basisstation,

des Abwärtsstrecken-Steuerungsinformationsformats an das Endgerät;

wobei eine Verwürfelung von Daten-Demodulationsreferenzsignalen, DMRS, durch die Verwendung von verschiedenen Piloterzeugungszeichenfolgen erreicht wird,

wobei die Angabeinformation dem Endgerät einen Zustand angibt, der einem Satz von Ports entspricht, die zum Übertragen eines Daten-DMRS verwendet werden, wobei der einem jeweiligen Zustand entsprechende Satz eine Mindestportnummer beinhaltet,

**dadurch gekennzeichnet, dass** ein Satz von Mindestportnummern aller Zustände ein Satz von allen verfügbaren Ports ist, so dass, wenn das Daten-DMRS übertragen wird, das Endgerät auf irgendeinen Port von allen verfügbaren Ports festgelegt werden kann, wobei alle verfügbaren Ports die Ports 7, 8, 9, 10, 11, 12, 13 und 14 umfassen, so dass ein Satz, der aus Mindestportnummern aller Zustände gebildet ist, [7,8,9,10,11,12,13,14] ist.

## Revendications

1.  Un appareil pour traiter des informations de commande de liaison descendante, applicable à une station de base et comprenant un module de génération d'informations de commande de liaison descendante et un module de transmission d'informations de commande de liaison descendante,

où

le module de génération d'informations de commande de liaison descendante est configuré pour générer un format d'informations de commande de liaison descendante lorsque la transmission de données est réalisée, où un champ du format d'informations de commande de liaison descendante véhicule des informations d'indication pour indiquer à un terminal un port utilisé pour transmettre un signal de référence de démodulation de données, DMRS, et un numéro d'identité d'embrouillage correspondant à une séquence de génération de pilote ; et

le module de transmission d'informations de commande de liaison descendante est configuré pour transmettre le format d'informations de commande de liaison descendante au terminal ;

où l'embrouillage des signaux de référence de démodulation de données, DMRS, est obtenu en utilisant différentes séquences de génération de pilote,

où les informations d'indication indiquent au terminal un état correspondant à un ensemble de ports utilisés pour transmettre un DMRS de données, où l'ensemble correspondant à chaque état comprend un numéro de port minimal, **caractérisé en ce qu'**un ensemble de numéros de port minimaux de tous les états est

un ensemble de tous les ports disponibles, de sorte que lors de la transmission du DMRS de données, le terminal puisse être programmé pour n'importe quel port parmi tous les ports disponibles, où tous les ports disponibles incluent les ports 7, 8, 9, 10, 11, 12, 13 et 14, de sorte qu'un ensemble constitué de numéros de port minimaux de tous les états est [7, 8, 9, 10, 11, 12, 13, 14].

2.  Un procédé pour traiter des informations de commande de liaison descendante, comprenant :

la génération (201) par une station de base d'un format d'informations de commande de liaison descendante lorsque la transmission de données est réalisée, où un champ du format d'informations de commande de liaison descendante véhicule des informations d'indication pour indiquer à un terminal un port utilisé pour transmettre un signal de référence de démodulation de données, DMRS, et un numéro d'identité d'embrouillage correspondant à une séquence de génération de pilote ; et

la transmission (202) par la station de base du format d'informations de commande de liaison descendante au terminal ;

où l'embrouillage des signaux de référence de démodulation de données, DMRS, est obtenu en utilisant différentes séquences de génération de pilote,

où les informations d'indication indiquent au terminal un état correspondant à un ensemble de ports utilisés pour transmettre un DMRS de données, où l'ensemble correspondant à chaque état comprend un numéro de port minimal,

**caractérisé en ce qu'**un ensemble de numéros de port minimaux de tous les états est un ensemble de tous les ports disponibles, de sorte que lors de la transmission du DMRS de données, le terminal puisse être programmé pour n'importe quel port parmi tous les ports disponibles, où tous les ports disponibles incluent les ports 7, 8, 9, 10, 11, 12, 13 et 14, de sorte qu'un ensemble constitué de numéros de port minimaux de tous les états est [7, 8, 9, 10, 11, 12, 13, 14].

Downlink control
information
generation
module

Downlink control
information
transmission
module

FIG. 1

A base station establishes a downlink control information
format when data transmission is performed, wherein a
field of the downlink control information format carries
indication information for indicating to a terminal a port
used for transmitting a data DMRS and a scrambling
identity number corresponding to a pilot generation
sequence

201

The base station transmits the downlink control
information format to the terminal

202

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012176884 A1

- US 2011237283 A1

### Non-patent literature cited in the description

- DMRS indication in DL enhanced multiple antenna transmission. **CMCC.** 3GPP DRAFT; R1-105273 DMRS INDICATION IN DL ENHANCED MULTIPLE ANTENNA TRANSMISSION, 3RD GENERATION PARTNERSHIP PROJECT (3GPP). MOBILE COMPETENCE CENTRE, 14 October 2010
- Considerations on Downlink Control Signalling for LTE-A DL-MIMO. **ZTE.** 3GPP DRAFT; R1-104961 DL CONTROL SIGNALLING, 3RD GENERATION PARTNERSHIP PROJECT (3GPP). MOBILE COMPETENCE CENTRE

- Consideration on Downlink Signalling for DMRS port indication with different MU dimensions. **ZTE.** 3GPP DRAFT; R1-101834 MU_DL SIGNALLING_DMRSPORT, 3RD GENERATION PARTNERSHIP PROJECT (3GPP). MOBILE COMPETENCE CENTRE, 07 April 2010, vol. RAN WG1